# EUROPÄISCHE PATENTSCHRIFT

(11) **EP 0 906 596 B1**
(45) Veröffentlichungstag und Bekanntmachung des Hinweises auf die Patenterteilung: **26.05.2004**
(21) Anmeldenummer: 97931629.6
(22) Anmeldetag: 20.06.1997
(51) Int. Cl.: G05B 19/418

(54) **PROZESSAUTOMATISIERUNGSSYSTEM**
PROCESS AUTOMATION SYSTEM
SYSTEME D'AUTOMATISATION DE PROCESSUS INDUSTRIELS

(30) Priorität: 21.06.1996 DE 19624929
(43) Veröffentlichungstag der Anmeldung: 07.04.1999
(73) Patentinhaber: SIEMENS AKTIENGESELLSCHAFT, 80333 München (DE)
(72) Erfinder: BROTZ, Michael, D-76275 Ettlingen (DE); KLEIN, Raimund, D-61440 Oberursel (DE); LANGELS, Hans-Joachim, D-59427 Unna (DE)
(86) Internationale Anmeldenummer: PCT/DE1997/001282
(87) Internationale Veröffentlichungsnummer: WO 1997/050025

(56) Entgegenhaltungen:
- EP-A- 0 201 063
- EP-A- 0 352 683
- DE-A- 4 235 186
- US-A- 4 819 149

## Beschreibung

Die Erfindung betrifft ein Prozeßautomatisierungssystem nach dem Oberbegriff von Anspruch 1.

Ein solches Prozeßautomatisierungssystem ist aus der US-A-4 819 149 bekannt.

Prozeßautomatisierungssysteme sind in der Regel hierarchisch von einer obersten Bedien- und Beobachtungsebene, auch Management- oder Leitebene genannt, über Automatisierungsebenen bis zu einer untersten Sensor-/Aktorebene strukturiert. Die Kommunikation zwischen den Automatisierungsbausteinen in den einzelnen Automatisierungsebenen erfolgt über Bussysteme, wobei aber vor allem in der untersten Automatisierungsebene noch ein hoher Grad an herkömmlichen Verbindungsstrukturen zu finden ist, so daß bei der Errichtung von Anlagen ein hoher Verkabelungsaufwand entsteht. Zunehmend werden daher auch zur Ankopplung der Sensoren und Aktoren Bussysteme verwendet (Siemens, Engineering & Automation, 1/95, Seiten 10, 11).

Die Programmierung und Inbetriebnahme der Automatisierungsbausteine und der Einrichtungen in der Bedien- und Beobachtungsebene kann auf unterschiedliche Weise erfolgen.

Im einfachsten Fall werden zunächst die Automatisierungsbausteine einzeln programmiert. Getrennt hiervon wird dann die Bedien- und Beobachtungsebene und dann die Kommunikation zwischen den Automatisierungsbausteinen und der Bedien- und Beobachtungsebene programmiert. Die Programmierung ist jedoch zeitaufwendig und fehlerbehaftet.

Sind alle Informationen über das Prozeßautomatisierungssystem in der Bedien- und Beobachtungsebene vorhanden, was in der Regel nur dann der Fall ist, wenn das Automatisierungssystem homogen ist und aus einer Hand errichtet worden ist, so können aus einem Engineering-Werkzeug heraus von einer zentralen Stelle sowohl die Automatisierungsbausteine als auch die Bedien- und Beobachtungsebene und die Kommunikation programmiert und in Betrieb genommen werden (Top-Down-Vorgehensweise). Bei einer nachträglichen Änderung oder Erweiterung des Automatisierungssystems, bei der Einbindung fremder Automatisierungssysteme oder bei einer nachträglichen Installation der Bedien- und Beobachtungsebene ist diese Vorgehensweise jedoch nicht möglich.

Schließlich können die Automatisierungsbausteine mit einem Werkzeug programmiert werden und anschließend die Programmierungsdaten in ein Werkzeug zur Programmierung der Bedien- und Beobachtungsebene übertragen werden. Diese Vorgehensweise setzt voraus, daß eine Programmdatei der Automatisierungsbausteine vorliegt.

Der Erfindung liegt die Aufgabe zugrunde, ein Prozeßautomatisierungssystem zu schaffen, das sich ohne großen Programmierungs- und Inbetriebsetzungsaufwand errichten und nachträglich verändern bzw. erweitern läßt.

Gemäß der Erfindung wird die Aufgabe durch das in Anspruch 1 genannte Prozeßautomatisierungssysteme gelöst.

Vorteilhafte Weiterbildungen des erfindungsgemäßen Prozeßautomatisierungssystems sind in den Unteransprüchen angegeben.

Bei den von den einzelnen Technologiemodulen selbständig ausführbaren Funktionen handelt es sich beispielsweise um einen Regler, einen Sollwertgeber, einen Sensor (Istwertgeber) und einen Aktor (Stellglied). Die modulspezifischen Informationen beinhalten zunächst die jeweilige Funktion des Technologiemoduls, also z. B. Regler, und seine Einbindung in die Meß-, Steuer- und Regelanlage, also die Adressen anderer Technologiemodule, hier die Adressen des Sollwertgebers und Istwertgebers, von denen der Regler seine Eingangswerte erhält, und die Adresse des von dem Regler zu beeinflussenden Stellgliedes. Darüber hinaus enthalten die modulspezifischen Informationen Angaben zu dem jeweiligen Gerätetyp, Hersteller usw. Die gespeicherten modulspezifischen Informationen werden von der Kommunikationseinheit des jeweiligen Technologiemoduls über den Datenbus an die Kommunikationseinrichtung übertragen und dort für einen schnellen Zugriff durch die Bedien- und Beobachtungseinrichtung gespeichert. Die Bedienund Beobachtungseinrichtung kann so auf die Informationen aller jeweils an den Datenbus angeschlossenen Technologiemodule zugreifen und diese Informationen automatisch seiner Bedien- und Beobachtungsoberfläche hinzufügen bzw. mit entsprechenden Mitteln die Bedien- und Beobachtungsoberfläche aufgrund der modulspezifischen Informationen erstellen. Damit läßt sich das erfindungsgemäße Automatisierungssysteme auf einfachste Weise aus dem prozeßnahen Bereich heraus erstellen, verändern oder erweitern.

Zusätzlich zu den automatisch von den Technologiemodulen an die Kommunikationseinrichtung übertragenen und dort gespeicherten modulspezifischen Informationen lassen sich in vorteilhafter Weise über eine Service-Schnittstelle weitere anlagenspezifische Informationen in die Kommunikationseinrichtung eingeben und abspeichern. Ein Beispiel hierfür sind bei einer Anlage zur Gebäudeautomatisierung Informationen über die Raumaufteilung, die in die Erstellung der Bedien- und Beobachtungsoberfläche einfließen.

Die Technologiemodule können vorzugsweise über ihre Kommunikationseinheiten und den Datenbus funktionsrelevante Daten untereinander austauschen. So kann der oben erwähnte Regler über diesen Weg den Sollwert von dem Sollwertgeber und den Istwert von dem Istwertgeber erhalten und seinerseits einen Stellbefehl an das Stellglied abgeben.

Alternativ oder ergänzend hierzu können die Technologiemodule Ein- und/oder Ausgangsanschlüsse aufweisen, die zur direkten Übertragung der genannten funktionsrelevanten Daten und Größen mittels Leitungen untereinander verbunden sind.

Die Bedien- und Beobachtungseinrichtung kann über einen Fernbus, hierzu ist z. B. auch ein Telefonnetz oder eine drahtlose Datenübertragungsstrecke zu zählen, an der Kommunikationseinrichtung angeschlossen sein. So ist es auf einfache Weise möglich, das Automatisierungssystem oder mehrere gleichartige Automatisierungssysteme an unterschiedlichen Orten von zentraler Stelle aus zu bedienen und zu beobachten. Ein Beispiel hierfür ist die Gebäudeautomatisierung mit einer zentralen Bedien- und Beobachtungseinrichtung und unterschiedlichen Automatisierungssystemen für unterschiedliche Gebäude.

Zur weiteren Erläuterung der Erfindung wird im folgenden auf die Figuren der Zeichnung Bezug genommen; im einzelnen zeigen
- Figur 1: ein Beispiel des erfindungsgemäßen Automatisierungssystems in Form eines Blockschaltbildes,
- Figur 2: eine alternative Ausbildung des die Technologiemodule betreffenden Teils des Automatisierungssystems und
- Figur 3: ein Blockschaltbild eines Technologiemoduls.

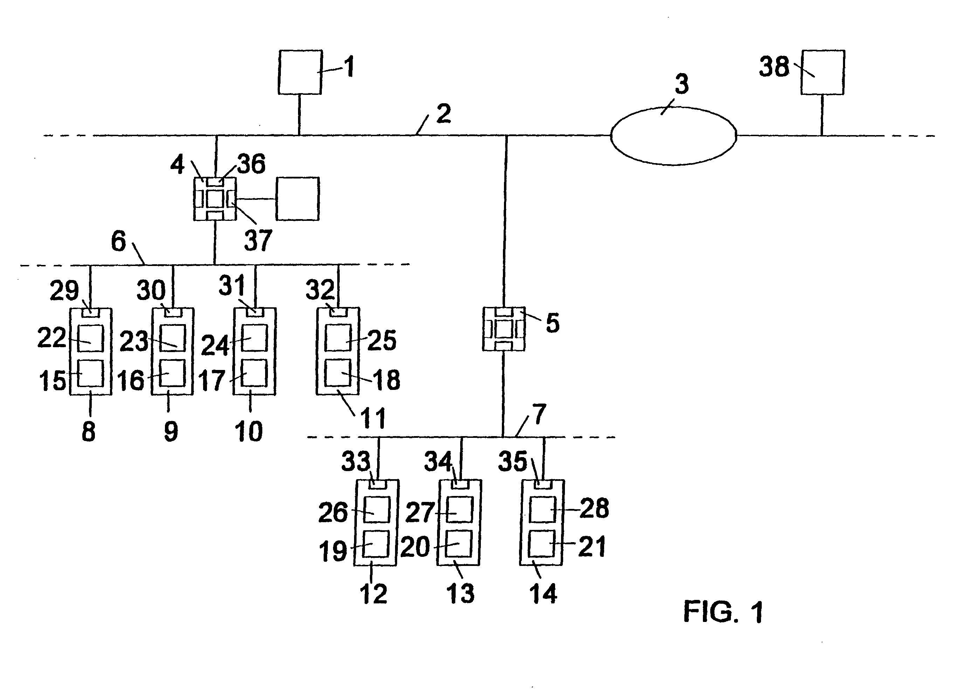

Figur 1 zeigt ein Prozeßautomatisierungssystem mit einer Bedien- und Beobachtungseinrichtung 1, die bei vorliegender Berechtigung über einen Fernbus 2, hier allgemein ein Daten-übertragungssystem, z. B. mit Telefonnetz 3, auf jede von an dem Fernbus 2 angeschlossenen Kommunikationseinrichtungen 4, 5 (Network-Interface-Controller) zugreifen kann. An jeder Kommunikationseinrichtung 4, 5 sind jeweils über einen Datenbus 6, 7 prozeßnahe Technologiemodule 8 bis 14 angeschlossen.

Jedes der Technologiemodule 8 bis 14 enthält jeweils Mittel 15 bis 21 zur selbsttätigen Ausführung einer vorgegebenen Funktion; im Falle der gezeigten Technologiemodule 8, 9, 10 und 11 sind dies die Funktionen: Regler, Sollwertgeber, Stellglied und Istwertgeber.

Ferner enthält jedes Technologiemodul 8 bis 14 jeweils einen Speicher 22 bis 28, in dem modulspezifische Informationen, wie die jeweilige Funktion des Technologiemoduls 8 bis 14 und seine Einbindung in die Meß-, Steuer- und Regelanlage, also sein Zusammenwirken mit anderen Technologiemodulen, gespeichert sind. Bei dem Regler 8 sind dies die Information "Regler" und die Adressen des Sollwertgebers 9 und Istwertgebers 11, von denen der Regler 8 Soll- und Istwerte bezieht, sowie die Adresse des Stellgliedes 10, das von dem Regler 8 in Abhängigkeit von der Regelabweichung gesteuert wird. Der Istwertgeber 11 enthält die Information "Istwertgeber" sowie die Adresse des Reglers 8, an den er den Istwert liefert. Weitere gespeicherte modulspezifische Informationen sind der jeweilige Gerätetyp, Hersteller, Ausgabestand usw.

Alle Technologiemodule 8 bis 14 enthalten außerdem Kommunikationseinheiten 29 bis 35, über die sie an den zugeordneten Datenbus 6, 7 angeschlossen sind.

Während einer Initialisierungsphase melden sich die einzelnen Technologiemodule, z. B. 8 bis 11, bei der übergeordneten Kommunikationseinrichtung 4 an, indem ihre jeweiligen Kommunikationseinheiten 29 bis 32 die modulspezifischen Informationen aus den Speichern 22 bis 25 über den Datenbus 6 an die Kommunikationseinrichtung 4 übertragen, wo diese Informationen in einem Speicher 36 abgelegt werden. Die Bedien- und Beobachtungseinrichtung 1 kann jetzt über den Fernbus 2 auf den Speicher 36 der Kommunikationseinrichtung 4 zugreifen und die dort gespeicherten modulspezifischen Informationen in automatisierter Form seiner Bedien- und Beobachtungsoberfläche hinzufügen bzw. diese aufgrund der Zugriffsinformationen erstellen. Die in dem Speicher 36 der Kommunikationseinrichtung 4 enthaltenen modulspezifischen Informationen können außerdem durch anlagenspezifische Informationen ergänzt werden, die der Kommunikationseinrichtung 4 über eine Service-Schnittstelle 37 zuführbar sind.

Während der Prozeßregelung und -steuerung tauschen bei dem dargestellten Ausführungsbeispiel die einzelnen Technologiemodule 8 bis 11 über ihre Kommunikationseinheiten 29 bis 32 und den Datenbus 6 funktionsrelevante Daten untereinander aus. So erhält der Regler 8 von dem Sollwertgeber 9 den Sollwert und von dem Istwertgeber 11 den Istwert und berechnet daraus eine Stellgröße, die er dem Stellglied 10 zuführt.

Eine Weiterleitung von Prozeßdaten unterlagerter Technologiemodule, z. B. 8 bis 11, über die Kommunikationseinrichtung 4 an andere Kommunikationseinrichtungen 5 oder an die Bedienund Beobachtungseinrichtung 1 oder eine andere Bedien- und Beobachtungseinrichtung 38 erfolgt erst nach Anmeldung dieses Weiterleitungswunsches bei dieser Kommunikationseinrichtung. Die Weiterleitung zwischen zwei Kommunikationseinrichtungen 4, 5 ist in der Regel eine Prozeßfunktion, die dauerhaft in der Kommunikationseinrichtung hinterlegt werden kann. Die Weiterleitung an eine der Bedien- und Beobachtungseinrichtungen 1, 38 erfolgt durch Auswahl einer Bedienperson. Eine Zwischenspeicherung von aktuellen Prozeßdaten in der Kommunikationseinrichtung 4, 5 ist zwar grundsätzlich möglich, wegen des erforderlichen Speicherplatzes hier nicht vorgesehen.

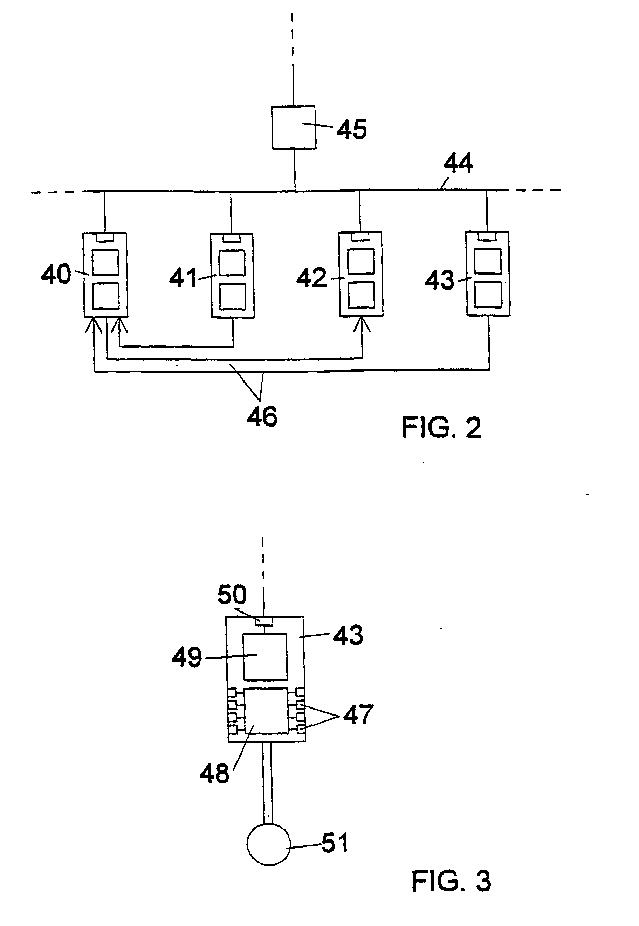

Figur 2 zeigt die Verbindung von Technologiemodulen 40 bis 43 über einen Datenbus 44 mit einer Kommunikationseinrichtung 45. Die funktionsrelevanten Daten und Größen, die im Falle des Ausführungsbeispiels nach Figur 1 zwischen den einzelnen Technologiemodulen 8 bis 11 über deren Kommunikationseinheiten 29 bis 32 und den Datenbus 6 übertragen werden, werden hier über gesonderte Leitungsverbindungen 46 zwischen den beteiligten Technologiemodulen 40 bis 43 übertragen.

Hierzu enthält, wie Figur 3 zeigt, beispielsweise das Technologiemodul 43 eine vorgegebene Anzahl von Ein- und Ausgangsanschlüssen 47, die jeweils getrennt als binärer oder analoger Eingang oder Ausgang genutzt werden können. Diese Einund Ausgangsanschlüsse 47 sind den Mitteln 48 zur Ausführung der modulspezifischen Funktion zugeordnet. Der die modulspezifischen Informationen enthaltende Speicher ist mit 49 und die Kommunikationseinheit mit 50 bezeichnet. Die Funktion des gezeigten Technologiemoduls 43 ist die eines Istwertgebers, weswegen das Technologiemodul 43 mit einem Sensor 51 ausgerüstet ist und mit diesem eine bauliche Einheit bildet. Darüber hinaus ist es aber auch möglich, den Sensor außerhalb des Technologiemoduls 43 vorzusehen und über eine Leitung mit einem der Eingangsanschlüsse 47 zu verbinden.

## Patentansprüche

1. Prozeßautomatisierungssystem zur Realisierung einer Meß-, Steuer- und Regelanlage, mit einer Bedien- und Beobachtungseinrichtung (1), die über eine Kommunikationseinrichtung (4) mit einem Datenbus (6) verbunden ist, an dem prozeßnahe Technologiemodule (8 bis 11) angeschlossen sind, die Mittel (15 bis 18) zur selbständigen Ausführung vorgegebener Funktionen im Rahmen der Prozeßautomatisierung aufweisen, wobei jedes Technologiemodul (8 bis 11) einen Speicher (22 bis 25) aufweist, in dem modulspezifische Informationen über die jeweilige Funktion des Technologiemoduls (8 bis 11) enthalten sind und wobei ferner jedes Technologiemodul (8 bis 11) eine Kommunikationseinheit (29 bis 32) enthält, über die es an den Datenbus (6) angeschlossen ist, **dadurch gekennzeichnet, daß** in dem Speicher (22 bis 25) außerdem modulspezifische Informationen über die jeweilige Einbindung des Technologiemoduls (8 bis 11) in die Meß-, Steuer- und Regelanlage enthalten sind und daß die Kommunikationseinheit (29 bis 32) dazu ausgebildet ist, während einer Initialisierungsphase die modulspezifischen Informationen an die Kommunikationseinrichtung (4) zu übertragen, in der diese Informationen für einen Zugriff durch die Bedien- und Beobachtungseinrichtung (1) gespeichert werden.

2. Prozeßautomatisierungssystem nach Anspruch 1, **dadurch gekennzeichnet, daß** die Kommunikationseinrichtung (4) eine Service-Schnittstelle (37) zur Eingabe und Abspeicherung zusätzlicher, anlagenspezifischer Informationen aufweist.

3. Prozeßautomatisierungssystem nach Anspruch 1 oder 2, **dadurch gekennzeichnet, daß** die Bedien- und Beobachtungseinrichtung (1) Mittel zur Erstellung einer Bedien- und Beobachtungsoberfläche aus den in der Kommunikationseinrichtung (4) gespeicherten modulspezifischen Informationen aufweist.

4. Prozeßautomatisierungssystem nach Anspruch 2, **dadurch gekennzeichnet, daß** die Bedien- und Beobachtungseinrichtung (1) Mittel zur Erstellung einer Bedien- und Beobachtungsoberfläche aus den in der Kommunikationseinrichtung (4) gespeicherten modulspezifischen Informationen und den anlagenspezifischen Informationen aufweist.

5. Prozeßautomatisierungssystem nach einem der vorangehenden Ansprüche, **dadurch gekennzeichnet, daß** die Kommunikationseinheiten (29 bis 32) zumindest einiger der Technologiemodule (8 bis 11) zum Austausch funktionsrelevanter Daten über den Datenbus (6) ausgebildet sind.

6. Prozeßautomatisierungssystem nach einem der vorangehenden Ansprüche, **dadurch gekennzeichnet, daß** die Mittel zur Funktionsausübung zumindest einiger Technologiemodule (40 bis 43).Ein- und/oder Ausgangsanschlüsse (47) zum Austausch funktionsrelevanter Daten und/oder Größen über Leitungsverbindungen (46) zwischen den Technologiemodulen (40 bis 43) aufweisen.

7. Prozeßautomatisierungssystem nach einem der vorangehenden Ansprüche, **dadurch gekennzeichnet, daß** die Bedien- und Beobachtungseinrichtung über einen Fernbus (2) an der Kommunikationseinrichtung (4) angeschlossen ist.

## Claims

1. Process automation system for implementing a measuring and control system, with an operator communication and monitoring device (1), which is connected via a communication device (4) to a data bus (6), connected to which are local technology modules (8 to 11) which have means (15 to 18) for automatically executing predetermined functions as part of the process automation, each technology module (8 to 11) having a memory (22 to 25) in which module-specific information about the respective function of the technology module (8 to 11) is contained and, furthermore, each technology module (8 to 11) including a communication unit (29 to 32) via which it is connected to the data bus (6), **characterized in that** module-specific information about the respective incorporation of the technology module (8 to 11) in the measuring and control system is also contained in the memory (22 to 25), and **in that** the communication unit (29 to 32) is designed in such a way that, during an initialization phase, the module-specific information is transmitted to the communication device (4), in which this information is stored for access by the operator communication and monitoring device (1).

2. Process automation system according to Claim 1, **characterized in that** the communication device (4) has a service interface (37) for the input and storage of additional, system-specific information.

3. Process automation system according to Claim 1 or 2, **characterized in that** the operator communication and monitoring device (1) has means for creating an operator communication and monitoring interface on the basis of the module-specific information stored in the communication device (4).

4. Process automation system according to Claim 2, **characterized in that** the operator communication and monitoring device (1) has means for creating an operator communication and monitoring interface on the basis of the module-specific information stored in the communication device (4) and the system-specific information.

5. Process automation system according to one of the preceding claims, **characterized in that** the communication units (29 to 32) of at least some of the technology modules (8 to 11) are designed for exchanging function-relevant data via the data bus (6).

6. Process automation system according to one of the preceding claims, **characterized in that** the means for executing functions of at least some of the technology modules (40 to 43) have input and/or output terminals (47) for exchanging function-relevant data and/or variables via line connections (46) between the technology modules (40 to 43).

7. Process automation system according to one of the preceding claims, **characterized in that** the operator communication and monitoring device is connected to the communication device (4) via a long-distance bus (2).

## Revendications

1. Système d'automatisation de processus pour la réalisation d'une installation de mesure, de commande et de régulation, comportant un dispositif de commande et d'observation (1) qui est relié par l'intermédiaire d'un dispositif de communication (4) à un bus de données (6) auquel sont raccordés des modules technologiques (8 à 11) qui sont adaptés aux processus et qui comportent des moyens (15 à 18) pour l'exécution indépendante de fonctions prédéterminées dans le cadre de l'automatisation de processus, chaque module technologique (8 à 11) comportant une mémoire (22 à 25) qui contient des informations spécifiques aux modules et concernant la fonction respective du module technologique (8 à 11) et chaque module technologique (8 à 11) contenant une unité de communication (29 à 32) par l'intermédiaire de laquelle il est raccordé au bus de données (6), **caractérisé par le fait que** la mémoire (22 à 25) contient en outre des informations spécifiques aux modules et concernant l'intégration respective du module technologique (8 à 11) dans l'installation de mesure, de commande et de régulation et que l'unité de communication (29 à 32) est conçue pour transmettre, pendant une phase d'initialisation, les informations spécifiques aux modules au dispositif de communication (4) dans lequel ces informations sont mémorisées pour un accès mis en oeuvre par le dispositif de commande et d'observation (1).

2. Système d'automatisation de processus selon la revendication 1, **caractérisé par le fait que** le dispositif de communication (4) comporte une interface de service (37) pour l'entrée et la mémorisation d'informations supplémentaires spécifiques à l'installation.

3. Système d'automatisation de processus selon la revendication 1 ou 2, **caractérisé par le fait que** le dispositif de commande et d'observation (1) comporte des moyens pour l'élaboration d'une interface de commande et d'observation à partir des informations spécifiques aux modules et mémorisées dans le dispositif de communication (4).

4. Système d'automatisation de processus selon la revendication 2, **caractérisé par le fait que** le dispositif de commande et d'observation (1) comporte des moyens pour l'élaboration d'une interface de commande et d'observation à partir des informations spécifiques aux modules et mémorisées dans le dispositif de communication (4) et à partir des informations spécifiques à l'installation.

5. Système d'automatisation de processus selon l'une des revendications précédentes, **caractérisé par le fait que** les unités de communication (29 à 32) au moins de quelques-uns des modules technologiques (8 à 11) sont conçues pour l'échange de données déterminantes pour les fonctions par l'intermédiaire du bus de données (6).

6. Système d'automatisation de processus selon l'une des revendications précédentes, **caractérisé par le fait que** les moyens pour l'exécution de fonctions au moins de quelques-uns des modules technologiques (40 à 43) comportent des connexions d'entrée et/ou de sortie (47) pour l'échange de données et/ou grandeurs déterminantes pour les fonctions par l'intermédiaire de liaisons par lignes (46) entre les modules technologiques (40 à 43).

7. Système d'automatisation de processus selon l'une des revendications précédentes, **caractérisé par le fait que** le dispositif de commande et d'observation est raccordé par l'intermédiaire d'un bus externe (2) au dispositif de communication (4).
